# EUROPEAN PATENT APPLICATION

(11) **EP 4 707 888 A1**
(43) Date of publication of application: **11.03.2026**
(21) Application number: 23935769.2
(22) Date of filing: 02.05.2023
(51) Int. Cl.: G02B 6/36

(54) **OPTICAL CONNECTOR CLEANING IMPLEMENT**

(71) Applicant: NTT Advanced Technology Corporation, Tokyo 163-1436 (JP)
(72) Inventor: HASHIMOTO, Etsu, Tokyo 163-1436 (JP); KAMOUCHI, Terumasa, Tokyo 163-1436 (JP); ANDO, Kazutoshi, Tokyo 163-1436 (JP)
(74) Representative: Samson & Partner Patentanwälte mbB
(86) International application number: PCT/JP2023/017153
(87) International publication number: WO 2024/228256

(57) **Abstract**

The optical connector cleaning device includes a cleaning device body; a rotary shaft (input shaft (18)) supported on the cleaning device body so as to be rotatable and movable in parallel; a cleaning head provided on the rotary shaft; a cleaning medium which is folded back in the cleaning head and which rotates together with the rotary shaft; and a rotary mechanism (6) for rotating the rotary shaft. The rotary mechanism (6) includes protrusions (first protrusion (21A), second protrusion (21B)) provided on the rotary shaft (input shaft (18)); and a wall (first to fourth vertical walls (52A-52D)) which is provided on the cleaning device body and which extends along the rotary shaft at a position adjacent to the rotary shaft. The wall includes a contact portion (side surface (53a), curved surface (54a), upper surface (55a)) with which a protrusion contacts while moving when the cleaning device body moves in parallel relative to the rotary shaft. The cleaning device body moves in parallel relative to the rotary shaft while the contact portion contacts the protrusion, thereby applying a rotational force to the rotary shaft. It is possible to provide an optical connector cleaning device including a rotary mechanism, that is compact, has a wide range of applications, and that allows easy molding and demolding.

## Description

### TECHNICAL FIELD

The present invention relates to an optical connector cleaning device including a rotary mechanism of which a distal end portion where a cleaning medium is exposed is rotated by a cleaning operation.

### BACKGROUND ART

With the development of optical communication technology, optical fibers have become explosively popular, and optical connectors used for optical fibers are also consumed in large quantities. A single-mode optical fiber communication network, which can carry large amounts of optical traffic, is an infrastructure system that supports optical communications. However, the core diameter is only 10 µm, and dust and dirt during connections can impair the reliability of the system. Therefore, the mating end face (ferrule) of the optical connector is cleaned before connecting.

An optical connector cleaning device is a tool used for cleaning optical connectors. It removes dust and dirt by putting a cleaning medium, such as a clean string or cloth, on the ferrule before joining and then moving the device. When cleaning an optical connector in a device, such an optical connector is housed in a connection housing called an adapter, and the cleaning end face is located in a recessed position in the adapter. Such an optical connector cleaning device used to clean optical connectors typically have a small-diameter cylindrical portion extending from a cleaning device body, which is held by a hand, to allow the cleaning medium to be brought closer to the adapter. Moreover, in order to improve cleaning performance, many of such devices do not simply move the cleaning medium, but also rotate a part or all of the small-diameter cylindrical portion, through which the cleaning medium passes, on a joint surface between the ferrule and the cleaning medium.

Optical connector cleaning devices having a structure that rotates a distal end portion are described in, for example, Patent Documents 1-3. The cleaner described in Patent Document 1 employs a rack-and-pinion mechanism in which a direct-acting gear, which works in conjunction with a finger-operated button, turns a rotating gear provided inside the cleaner body, causing the distal end portion, which serves as a cleaning portion directly connected to the rotating gear, to rotate. It also achieves a cleaning medium feed mechanism using a similar rack-and-pinion mechanism that shares the same button. Simply pressing the button allows the cleaning medium to be fed and the distal end portion to rotate. However, this structure requires the button to be moved in a direction perpendicular to a direction in which the cleaner is inserted into the adapter, necessitating two operations in different directions: insertion and button pressing.

In a cleaner described in Patent Document 2, when a cleaning device body is pushed in an inserting direction into an adapter, an internal cylindrical cam mechanism converts a parallel movement into a rotational movement, causing a distal end portion to rotate. This cleaner also has a cleaning medium feed mechanism constituted by a rack-and-pinion mechanism that operates by pushing the cleaning device body in the same manner as above. Therefore, in this cleaner, a single insertion operation causes a rotary mechanism and a feed mechanism to operate in synchronization, and a rotating operation of the distal end portion and a feeding operation of the cleaning medium are carried out simultaneously. In a cleaner described in Patent Document 3, an axial direction of a rotary shaft of a distal end portion for cleaning is aligned with an axial direction of a take-up-side bobbin that takes up the cleaning medium. Therefore, in this cleaner, a rotating operation of the entire small cylindrical portion including the distal end portion and a feeding operation of the cleaning medium are carried out at the same time using one cylindrical cam mechanism.

### PRIOR ART DOCUMENTS

Patent Document 1: JP4011564B
Patent Document 2: JP4579330B
Patent Document 3: JP5049350B

### SUMMARY OF THE INVENTION

Many conventional optical connector cleaning devices employ a cylindrical cam mechanism in which the direction in which the cleaning device body is pushed in coincides with the axial direction of the rotary shaft. This is because, as described above, the rotating operation and the feeding operation are performed by only a single operation of pushing the cleaning device body into the adapter. However, such a rotary cam mechanism has the following issues:
(1) When a spiral cam groove is formed on a cylindrical portion, on the rotary shaft side, that rotates while moving, a space approximately twice the operating stroke is required as the space in which the cylindrical portion moves. Accordingly, there are likely to be restrictions when providing a rotary mechanism in a narrow (especially in the longitudinal direction) space inside the cleaning device body.
(2) In order to form a cam groove on the rotary shaft, the cylindrical portion of the rotary shaft must be formed with a thickness sufficient to form the groove, at least in the region where the cam groove is to be formed. Moreover, it is difficult to form a cam groove on a hollow cylinder with a thin peripheral wall. For example, it is difficult to apply a cylindrical cam mechanism to a structure in which a thin cylindrical umbrella-like structure is formed around a thin rotary shaft.
(3) Many optical connector cleaning devices are made of molded plastics. The cam groove (cylindrical cam) of the rotary shaft has a complex three-dimensional shape with a spiral groove around a cylinder. This makes a mold for molding such a part complicated, and the demolding process also tends to be complicated.

The present invention aims to achieve a rotary mechanism that is compact, has a wide range of applications, and is easy to mold and demold, and to provide an optical connector cleaning device to which the rotary mechanism is applied, by solving the above-described problems of the cylindrical cam.

In order to achieve this object, an optical connector cleaning device of the present invention comprises:
a cleaning device body having a grip portion;
a rotary shaft having one end inserted into the cleaning device body and supported by the cleaning device body such that the rotary shaft is rotatable and movable in parallel by a predetermined traveling distance, while the rotary shaft projects in one direction from the cleaning device body;
a cleaning head provided at a distal end portion of the rotary shaft so as to rotate integrally with the rotary shaft, the cleaning head configured to face a surface-to-be-cleaned of the optical connector;
a cleaning medium extending along the rotary shaft, being folded back at the cleaning head and rotating together with the rotary shaft; and
a rotary mechanism configured to rotate the rotary shaft by reciprocating the cleaning device body in parallel relative to the rotary shaft, wherein
the rotary mechanism includes:
   a protrusion provided on the rotary shaft and protruding in a direction perpendicular to the axis of the rotary shaft; and
   a wall provided on the cleaning device body and extending along the rotary shaft at a position adjacent to the rotary shaft, wherein
   the wall includes a contact portion with which the protrusion contacts while moving when the cleaning device body moves in parallel relative to the rotary shaft; and wherein
   a rotational force is applied to the rotary shaft as the cleaning device body moves in parallel relative to the rotary shaft while the contact portion contacts with the protrusion.

In accordance with the present invention, it is possible to provide an optical connector cleaning device including a rotary mechanism, that is compact, has a wide range of applications, and that allows for easy molding and demolding.

### BRIEF DESCRIPTION OF THE DRAWINGS

FIG. 1 shows a top view of an optical connector cleaning device according to the present invention.
FIG. 2 shows a top view of an internal structure of the optical connector cleaning device.
FIG. 3 shows a perspective view illustrating a situation where a cleaning device body of the optical connector cleaning device is separated into two.
FIG. 4 shows a top view of an inner surface of a first half of the cleaning device body.
FIG. 5 shows a cross-sectional view of a guide.
FIG. 6 shows a top view of a rotary shaft.
FIG. 7A shows a perspective view for explaining the basic principle of the rotary mechanism.
FIG. 7B shows a perspective view for explaining the basic principle of the rotary mechanism.
FIG. 7C shows a front view for explaining the basic operation of the rotary mechanism.
FIG. 7D shows a top view for explaining the basic operation of the rotary mechanism.
FIG. 8A shows a perspective view for explaining the basic principle of the rotary mechanism.
FIG. 8B shows a front view for explaining the basic principle of the rotary mechanism.
FIG. 8C shows a top view for explaining the basic principle of the rotary mechanism.
FIG. 9 shows a top view for explaining the basic principle of the rotary mechanism for reverse rotation.
FIG. 10A shows a top view illustrating a configuration of a rotary mechanism that changes the rotation direction depending on the moving direction.
FIG. 10B shows a side view for explaining the configuration of the rotary mechanism that changes the rotation direction depending on the moving direction.
FIG. 10C shows a front view for explaining the configuration of the rotary mechanism that changes the rotation direction depending on the moving direction.
FIG. 11 shows a top view for comparing the lengths of optical connector cleaning devices.
FIG. 12 shows a top view of an internal structure of the optical connector cleaning device according to a second embodiment.
FIG. 13 shows a top view of the internal structure of the optical connector cleaning device according to a third embodiment.
FIG. 14 shows a perspective view illustrating a situation where the cleaning device body of the optical connector cleaning device according to the third embodiment is separated into two.
FIG. 15A shows a top view of an inner surface of a base-side half of a cleaning device body according to a fourth embodiment.
FIG. 15B shows a top view of an inner surface of a cover-side half of the cleaning device body according to the fourth embodiment.
FIG. 16A shows a front side cross-sectional view of a rotary mechanism according to the fourth embodiment.
FIG. 16B shows a side cross-sectional view of the rotary mechanism according to the fourth embodiment.
FIG. 17A shows a top view of the cover-side half showing a modification of the fourth embodiment.
FIG. 17B shows a top view of the base-side half showing a modification of the fourth embodiment.

### DETAILED DESCRIPTION OF THE INVENTION

### First embodiment

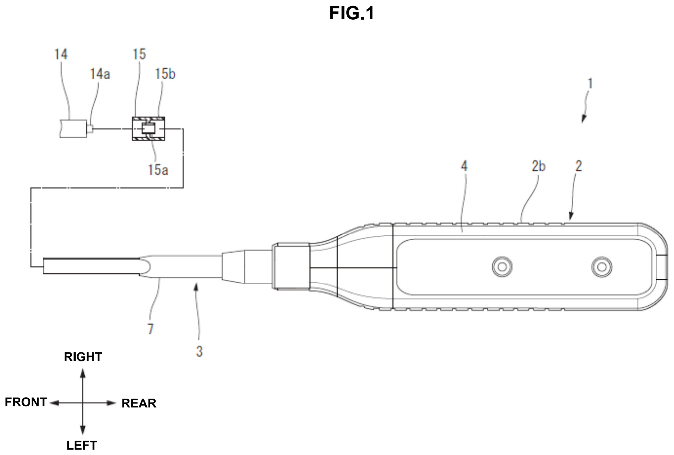

An embodiment of an optical connector cleaning device according to the present invention will now be described in detail with reference to FIGS. 1-11. The optical connector cleaning device 1 shown in FIG. 1 includes a cleaning device body 2 depicted on the right side of FIG. 1; and a cleaning portion 3 protruding from the cleaning device body 2 to the left side in FIG. 1.

### Description of cleaning device body

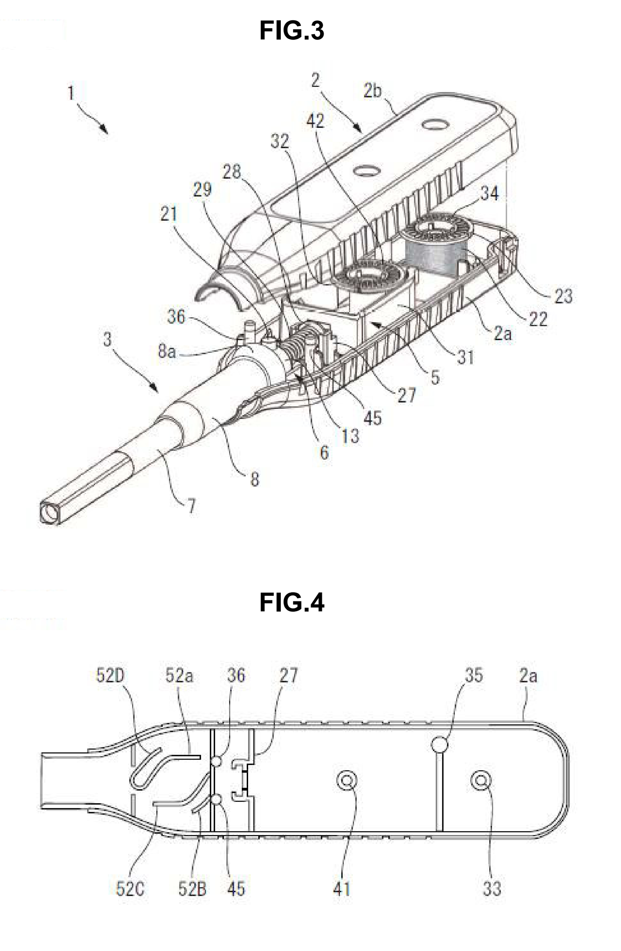

The cleaning device body 2 is made of a hollow member having a grip portion 4 that is gripped by operators, and is formed so as to be separable into a first half 2a (see FIG. 3) and a second half 2b in a direction perpendicular to the plane of FIG. 1. The shape of the grip portion 4 is substantially hollow prism with respect to the cross-sectional shape. The first half 2a and the second half 2b of the cleaning device body 2 are each made of a plastic material and molded using a mold (not illustrated) whose clamping direction is perpendicular to the plane of FIG. 1. In the following description of respective components of the optical connector cleaning device 1, when directions are indicated, the direction in which the cleaning portion 3 protrudes from the cleaning device body 2 is referred to as the front, and the opposite direction is referred to as the rear. In addition, when describing the parts, directions are indicated as follows: a direction in which the cleaning device body 2 is separated is defined as an up-down direction, and a direction perpendicular to the up-down direction and to a front-rear direction is defined as a left-right direction.

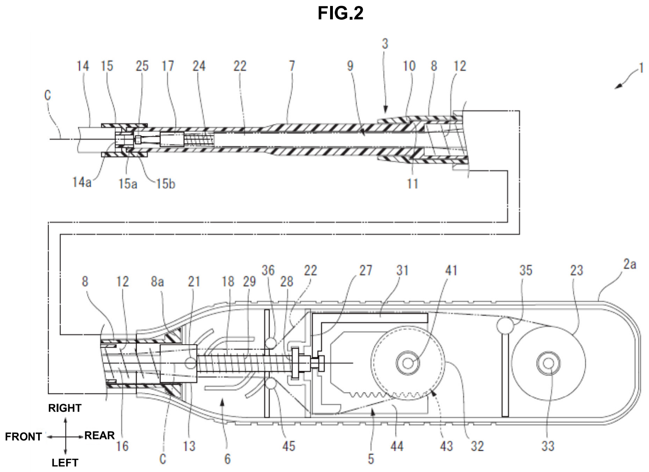

As shown in FIG. 2, a cleaning medium feed mechanism 5 and a rotary mechanism 6, to be described later, are provided inside the cleaning device body 2. The cleaning portion 3 includes, among others, a cylindrical guide 7 supported by the front end of the cleaning device body 2 so as to be freely movable; a guide lock 8 for holding the guide 7 such that the guide 7 is able to move in the front-rear direction; and a rotary shaft 9 inserted into the hollow portion of the guide 7. The guide lock 8 is fixed to the cleaning device body 2 by causing a large diameter portion 8a at the rear end abut an inner surface of the cleaning device body 2. A step 10 is formed on an inner side of the distal end of the guide lock 8. The guide 7 is arranged so as to pass through the guide lock 8. A rear end of the guide 7 is cylinder-shaped and forms a step 11, which comes into contact with the step 10 formed on the inner side of the guide lock 8, thereby restricting the guide 7 from coming off the guide lock 8.

A first compression coil spring 12 is arranged inside the rear end of the guide 7. The first compression coil spring 12 is positioned between the guide 7 and the cylindrical portion 13 of the rotary shaft 9 located inside the guide 7, and configured to bias the guide 7 forward relative to the rotary shaft 9. The front end of the guide 7 is formed in a hollow prism shape or a cylindrical shape (a hollow-prism shape is shown as an example in the drawings) in accordance with the optical connector 14 (see FIG. 1) and an adapter 15 attached to the distal end portion of the optical connector 14.

The front end of the guide 7 is formed in a shape that allows the front end to be inserted into the adapter 15. The adapter 15 includes a cylinder-shaped sleeve 15a into which a ferrule 14a of the optical connector 14 is fitted; and a hollow-prism-shaped housing 15b which covers the sleeve 15a. The front end of the guide 7 fits into an opening on the housing 15b during cleaning.

### Description of rotary shaft

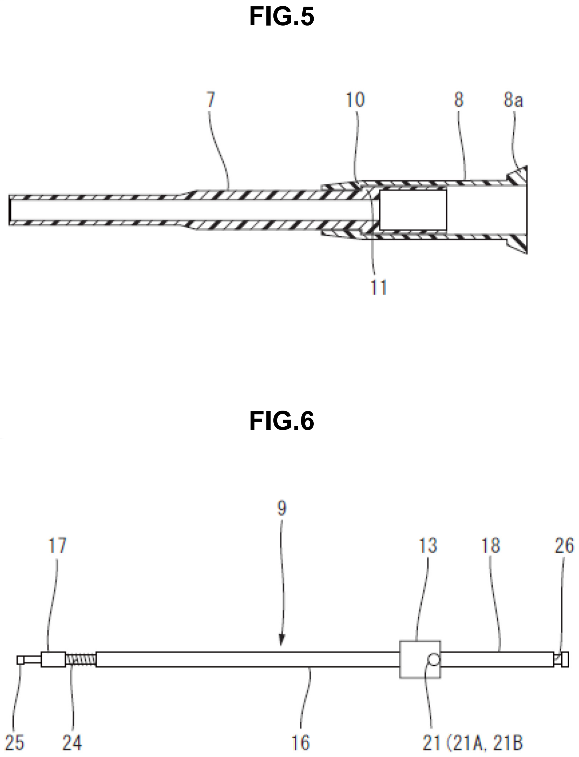

The rotary shaft 9 protrudes forward from the cleaning device body 2 while a rear end of the rotary shaft 9 is inserted inside the cleaning device body 2. As shown in FIGS. 2 and 6, the rotary shaft 9 according to this embodiment includes, among others, a round-rod-shaped main body 16 extending forward from the above-described cylindrical portion 13; a cleaning pin 17 connected to a front end of the main body 16; and an input shaft 18 extending rearward from the main body 16. The cylindrical portion 13, the main body 16, and the input shaft 18 are integrally formed by molding a plastic material.

The cylindrical portion 13 is formed in a cylindrical shape that fits inside the guide lock 8 described above so as to be movable in the front-rear direction. A protrusion 21 that constitutes a part of a rotary mechanism 6, to be described later, is formed on an outer periphery of a rear end of the cylindrical portion 13. The main body 16 has the following functions: a function of supporting the cleaning pin 17; a function of transmitting the rotational force applied from the rotary mechanism 6, described later, to the cleaning pin 17; and a function of guiding the cleaning medium 22, which may be made of thread or cloth, to the cleaning pin 17 described later.

The main body 16 is configured such that the rear end of the guide 7 abut the cylindrical portion 13 connected to the main body 16 by being pushed forward by the cleaning device body 2 during cleaning. The distal end portion of the guide 7 abuts the adapter 15, and therefore when the rear end of the guide 7 abuts the cylindrical portion 13, the main body 16 cannot move forward any further. Accordingly, by applying the pressing force, which is caused by pushing the cleaning device body 2, to the adapter 15 through the guide 7, said pressing force is not applied directly to a cleaning pin 17 described below.

The cleaning medium 22 is wound in a roll on a feed-side bobbin 23 provided inside the cleaning device body 2. The feed-side bobbin 23 will be described later. The cleaning medium 22 is inserted from the cylindrical portion 13 by being drawn from the feed-side bobbin 23 to the cleaning portion 3, and is guided along the side surface of the main body 16 to the cleaning pin 17 provided at the front end. The cleaning pin 17 is connected, by a connecting structure, which is not illustrated, to the main body 16 freely movable in the front-rear direction by a predetermined traveling distance and is connected to the main body 16 so as to rotate integrally with the main body 16. The cleaning pin 17 is biased forward relative to the main body 16 by a second compression coil spring 24 which is compressed to generate a pretension close to a pressing pressure suitable for cleaning. The connecting structure of the cleaning pin 17 may be, for example, the structure described in Patent Document 3.

A cleaning head 25 is provided at the front end of the cleaning pin 17. The cleaning medium 22 guided by the cleaning pin 17 is folded back at the cleaning head 25 so as to traverse the front-end face of the cleaning head 25. During cleaning, the cleaning head 25 is inserted into the above-described sleeve 15a of the adapter 15, and the cleaning medium 22 is brought into contact with the surface-to-be-cleaned of the optical connector 14 inside the sleeve 15a.

As shown in FIG. 6, the input shaft 18 of the main body 16 is formed in the shape of an elongated cylinder extending in the front-rear direction. An annular groove 26 is formed on the rear end of the input shaft 18 so that the input shaft 18 is partially slender. As shown in FIG. 2, the input shaft 18 is supported by a support bracket 27 of the cleaning device body 2 via a ring-shaped bearing member 28 so as to be freely rotatable and to be freely movable in parallel in the front-rear direction by a predetermined stroke. A third compression coil spring 29 is mounted in a compressed state around the input shaft 18 between the bearing member 28 and the cylindrical portion 13. The third compression coil spring 29 biases the rotary shaft 9 forward relative to the cleaning device body 2. The third compression coil spring 29 corresponds to the "compression coil spring" of the present invention.

An annular groove 26 formed in the rear end of the input shaft 18 engages with a sliding member 31 of the cleaning medium feed mechanism 5, to be described later. The sliding member 31 is arranged behind the support bracket 27 of the cleaning device body 2, and when the rotary shaft 9 moves forward relative to the cleaning device body 2, the rotary shaft 9 abuts the support bracket 27 from behind. Therefore, the rotary shaft 9 can move in parallel in the front-rear direction relative to the cleaning device body 2 between a forward position where the sliding member 31 contacts the support bracket 27 and a rearward position where the third compression coil spring 29 reaches its compression limit. However, the traveling distance of such a parallel movement of the rotary shaft 9 is not determined by the distance from the forward position to the rearward position, but by the rotary mechanism 6, to be described later.

### Description of cleaning medium feed mechanism

The cleaning medium feed mechanism 5 is for feeding the cleaning medium 22, and as shown in FIG. 2, it includes the following: a feed-side bobbin 23 arranged at the rear end inside the cleaning device body 2; a take-up-side bobbin 32 arranged at a distance forward from the feed-side bobbin 23; and a sliding member 31 arranged in proximity to the take-up-side bobbin 32.

### Description of feed-side bobbin

The feed-side bobbin 23 is rotatably supported by a first support shaft 33 of the cleaning device body 2 so that its axial direction is perpendicular to the axis C of the rotary shaft 9. The first support shaft 33 is provided upright on the first half 2a or the second half 2b so as to extend parallel to the direction in which the cleaning device body 2 is separated into the first half 2a and the second half 2b. As shown in FIG. 3, one end of the feed-side bobbin 23 in the axial direction is provided with a large number of recesses 34, which are arranged in the circumferential direction. The feed-side bobbin 23 shown in FIG. 2 is illustrated by omitting the recess 34.

An elastically deformable pawl (not illustrated), which engages with the recess 34, is provided on the inner surface of the cleaning device body 2 at a location facing the feed-side bobbin 23. Therefore, when the cleaning medium 22 is pulled and a rotational torque is applied in one direction, the feed-side bobbin 23 can rotate relative to the cleaning device body 2 by the pawl overriding a raised region between the recesses 34. That is, the feed-side bobbin 23 is assembled to the cleaning device body 2 without rotating unnecessarily by means of a large number of recesses 34 and the pawl.

The unused cleaning medium 22 drawn out from the feed-side bobbin 23 is hung onto a bobbin-side guide 35 provided on one side in the left-right direction in proximity to the feed-side bobbin 23, and the unused cleaning medium 22 is shifted to the right side within the cleaning device body 2. The cleaning medium 22 is then hung onto a front end on the right of the sliding member 31 and a first cleaning medium guide 36, described later, located on the right side of the rotary mechanism 6 and in proximity to the rear of the rotary mechanism 6, and guided toward the rotary shaft 9. The first cleaning medium guide 36 defines the position where the unused cleaning medium 22 drawn out from the feed-side bobbin 23 enters the rotary mechanism 6.

### Description of take-up-side bobbin

The take-up-side bobbin 32 is rotatably supported on a second support shaft 41, which is provided upright on the cleaning device body 2. The second support shaft 41 is provided so as to be parallel to the first support shaft 33. Similarly to the feed-side bobbin 23, the take-up-side bobbin 32 is attached to the cleaning device body 2 by a number of recesses 42 (see FIG. 3) provided at a first end in the axial direction and by a pawl (not illustrated) on the cleaning device body 2 such that the take-up-side bobbin 32 cannot rotate in a direction other than the direction in which the cleaning medium 22 is taken-up. The feed-side bobbin 32 shown in FIG. 2 is illustrated by omitting the recess 42.

A pinion 43 is provided at a second end of the take-up-side bobbin 32 in the axial direction. Although not shown in detail, the pinion 43 has teeth that mesh with that of a rack 44 formed on the sliding member 31. The cleaning medium feed mechanism 5 has a mechanism for transmission and driving by a rack-and-pinion mechanism having a pinion 43 and a rack 44, and for rotating the take-up-side bobbin 32 only in the take-up direction. Although not shown in detail, in this mechanism, the driving force is transmitted from the rack 44 to the take-up-side bobbin 32 only when the rack 44 moves rearward relative to the cleaning device body 2, and when the rack 44 moves forward, teeth are skipped between the rack 44 and the pinion 43, preventing the transmission of power, and therefore the take-up-side bobbin 32 rotates only in the take-up direction. The take-up direction is counterclockwise in FIG. 2. When designing the take-up direction to be clockwise, teeth are skipped in the rack-and-pinion mechanism when the rack 44 moves rearward, and the take-up-side bobbin 32 is rotated when the rack 44 moves forward.

As the take-up-side bobbin 32 rotates in the take-up direction, the used cleaning medium 22 is taken up onto the take-up-side bobbin 32. The cleaning medium 22 taken up onto the take-up-side bobbin 32 is pulled rearward from the rotary shaft 9 and is hung onto a second cleaning medium guide 45, described later, located on the left side of the rotary mechanism 6 in proximity to the rear of the rotary mechanism 6, and a front end on the left side of the sliding member 31, to be guided to the take-up-side bobbin 32. The position where the used cleaning medium 22 exits the rotary mechanism 6 is defined by the second cleaning medium guide 45. The second cleaning medium guide 45, and the above-described bobbin-side guide 35 and the first cleaning medium guide 36 are each formed in an elongated cylindrical shape and are arranged upright on the cleaning device body 2 so as to be parallel to the first and second support shafts 33, 41.

### Description of sliding member

The sliding member 31 has the following functions: a function of forming a gap between the right inner surface and the left inner surface of the cleaning device body 2 through which the cleaning medium 22 passes; and a function of converting a reciprocating movement into a rotational movement using the above-described rack 44 to drive the take-up-side bobbin 32. In addition, the sliding member 31 is rotatably connected to the input shaft 18 by engaging with the annular groove 26 of the input shaft 18, and is connected to the input shaft 18 so as to move integrally with the input shaft 18 (rotating shaft 9) in the front-rear direction relative to the cleaning device body 2. The sliding member 31 is formed to extend over the inner surface of the cleaning device body 2, which has a substantially rectangular cross section, and therefore the sliding member 31 does not rotate integrally with the rotary shaft 9 when the rotary shaft 9 is driven by the rotary mechanism 6, described later, to be rotated relative to the cleaning device body 2.

### Description of rotary mechanism

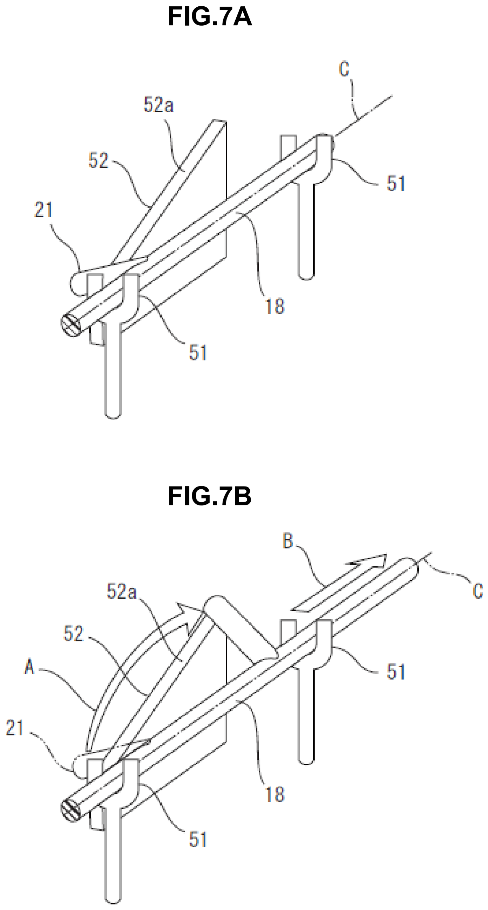

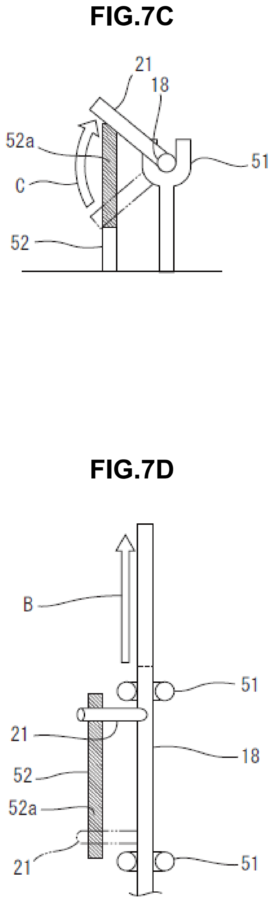

The configuration of the rotary mechanism 6 according to this embodiment will be described now. First, the principle by which the rotary mechanism 6 rotates the rotary shaft 9 will be described with reference to FIGS. 7A-10C. FIGS. 7A-7D show the basic principle of the rotary mechanism 6. The components are depicted in a simplified manner to make the basic principle easier to understand. FIG. 7A shows a perspective view of a situation before the start of operation; FIG. 7B shows a perspective view of a situation after the start of operation; FIG. 7C shows a front view; and FIG. 7D shows a top view. As shown in FIG. 7A, the rotary mechanism 6 is constituted by an input shaft 18, a bearing 51, a protrusion 21 extending from the input shaft 18, and a vertical wall 52.

The input shaft 18 is rotatably supported by two bearings 51. The vertical wall 52 extends along the input shaft 18 at a location adjacent to the input shaft 18. An upper surface 52a of the vertical wall 52 is formed so as to have an inclined surface. The upper surface 52a is inclined so that the height of the vertical wall 52 gradually increases from one end to the other end of the vertical wall 52. The protrusion 21 shown in FIG. 7A is put on the lowest part of the upper surface 52a.

When the input shaft 18 is moved from the situation shown in FIG. 7A in a direction in which the axis C extends (to the upper right in FIG. 7A and upward in FIG. 7D), the situation of the input shaft 18 changes to a situation shown in FIG. 7B. That is, the protrusion 21 rotates in a direction indicated by Arrow A in FIG. 7B and moves in parallel in a direction indicated by Arrow B. At this time, the protrusion 21 moves while contacting the vertical wall 52, and therefore the protrusion 21 moves from an initial position indicated by a dashed two-dotted line to a position indicated by a solid line as shown in FIG. 7C, and the input shaft 18 rotates clockwise in the figure as shown by Arrow C. At this time, the protrusion 21 moves while contacting the upper surface 52a of the vertical wall 52. In this case, the upper surface 52a serves as a contact portion. Portions shown by hatching in FIGS. 7C and 7D are contact portions. As described above, the basic principle of the rotary mechanism 6 is that a linear movement is converted into a rotational movement by the input shaft 18 having the protrusion 21 and the vertical wall 52 moving relative to each other in the axial direction of the input shaft 18.

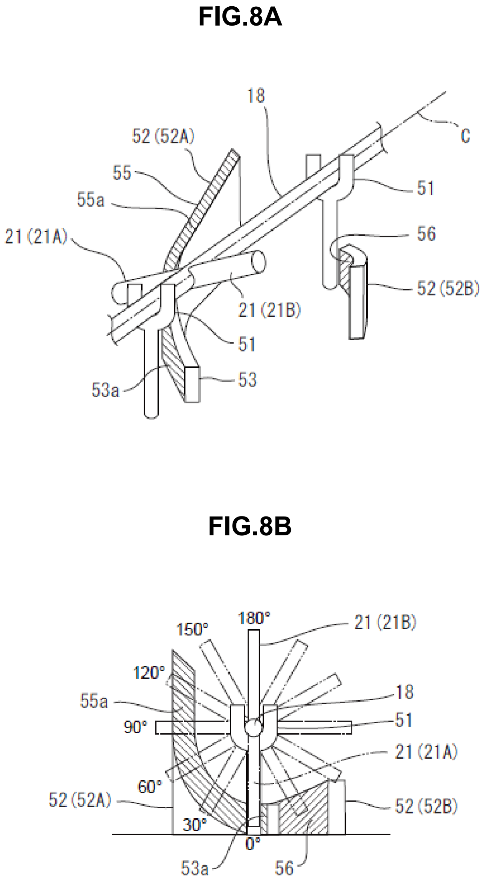

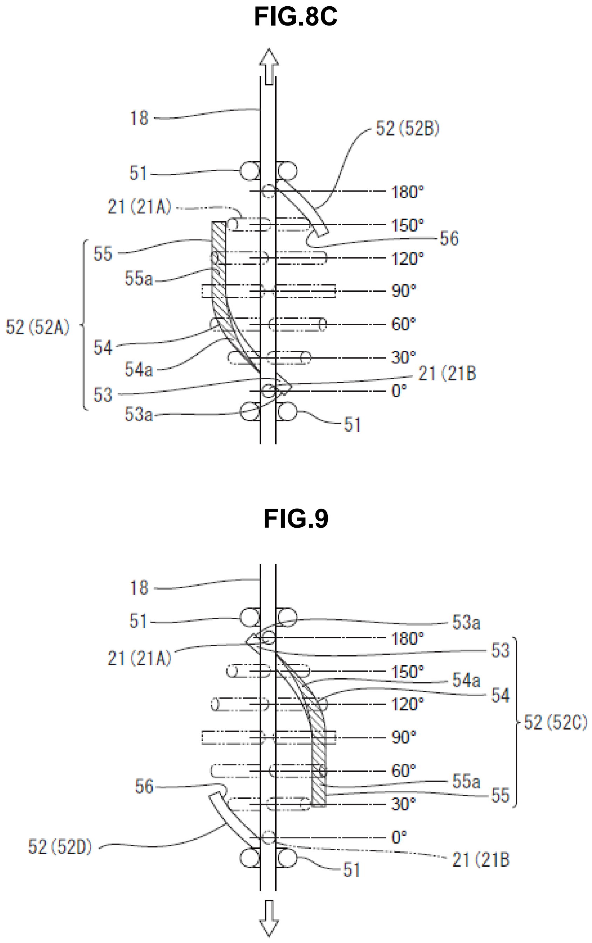

In order to apply this basic principle to an actual optical connector cleaning device 1, a more complicated structure is adopted so that the input shaft 18 can rotate from any angle. FIGS. 8A-8C schematically show the basic structure of the rotary mechanism 6 according to the present invention. FIG. 8A shows a perspective view; FIG. 8B shows a front view; and FIG. 8C shows a top view. FIGS. 8A-8C show two vertical walls 52 and two protrusions 21 for moving the input shaft 18 to achieve a rotation angle from 0° to 180°.

As shown in FIG. 8A, the two vertical walls 52 are a first vertical wall 52A which is relatively long, and a second vertical wall 52B which is relatively short. As shown in FIG. 8C, the first vertical wall 52A extends from a side of one end (lower end in the drawings) toward a side of the other end of the input shaft 18. The first vertical wall 52A is a wall having similar function to the vertical wall 52 shown in FIG. 7. As shown in FIG. 8C, the first vertical wall 52A is constituted by the following: an inclined wall portion 53 which extends diagonally so as to pass below the input shaft 18 and intersect with the input shaft 18 in a top view; and a parallel wall portion 55 which is connected to the inclined wall portion 53 via a curved portion 54 and extends parallel to the input shaft 18. The curved portion 54 has a curved surface 54a which smoothly connects the side surface 53a of the inclined wall portion 53 and the upper surface 55a of the parallel wall portion 55. The height of the first vertical wall 52A gradually increases as it approaches from the inclined wall portion 53 through the curved portion 54 to the parallel wall portion 55.

The second vertical wall 52B is for rotating the input shaft 18 such that the rotation angle further increases after the protrusion 21 reaches the highest part of the first vertical wall 52A (after the rotation angle reaches a predetermined angle). As shown in FIG. 8C, the second vertical wall 52B is arranged on the opposite side of the input shaft 18 from the parallel wall portion 55 of the first vertical wall 52A in a top view. In addition, the second vertical wall 52B extends in the axial direction of the input shaft 18 from a position substantially identical to the end of the first vertical wall 52A (upper end in FIG. 8C) toward the other end of the input shaft 18 (upper side in FIG. 8C), in a curved, substantially arc-shaped manner in a top view. The planar shape of the second vertical wall 52B is shaped to follow the movement locus of the protrusion 21 when the input shaft 18 moves in parallel while rotating.

In the principle diagrams of FIGS. 7A-7D described above, the protrusion 21 protrudes from the input shaft 18 toward one direction, but in order for the input shaft 18 to rotate from 0° to 180°, two protrusions 21 protruding on two sides of the input shaft 18 are used. The two protrusions 21 are a first protrusion 21A pointing directly downward in FIG. 8B and a second protrusion 21B pointing directly upward in FIG. 8B. As shown in FIG. 8B, if the rotation angle of the input shaft 18 when the first protrusion 21A is pointing directly downward is assumed as 0°, and the rotation angle of the input shaft 18 when the first protrusion 21A rotates so that it points directly upward is assumed as 180°, the input shaft 18 rotates from 0° to around 120° as the first protrusion 21 moves while contacting the surfaces that are shown with downward right hatching in FIGS. 8A-8C.

The surfaces shown with downward right hatching are the following: a side surface 53a of the inclined wall portion 53 of the first vertical wall 52A; a curved surface 54a of the curved portion 54; and an upper surface 55a of the parallel wall portion 55. When the rotation angle of the input shaft 18 further increases to exceed 120°, the first protrusion 21A no longer contacts with the first vertical wall 52A, and therefore the rotational force is lost. However, after the first protrusion 21A reaches the end of the first vertical wall 52A, the second protrusion 21B provided on the opposite side of the first protrusion 21A abuts the side surface 56 of the second vertical wall 52B. Therefore, if the input shaft 18 is pushed in as is, the second protrusion 21B moves along the side surface 56 of the second vertical wall 52B, causing the input shaft 18 to rotate until the rotation angle reaches 180°.

In this way, in the first half of the rotation of the input shaft 18, the input shaft 18 rotates as the first protrusion 21A moves while contacting the first vertical wall 52A, and in the second half, the input shaft 18 rotates as the second protrusion 21B moves while contacting the second vertical wall 52B. Thereby, it is possible to achieve rotation of the input shaft 18 from the rotation angle of 0° to 180°. The magnitude of the rotation angle in the first half and the magnitude of the rotation angle in the second half depend on the length of the protrusion 21 and are therefore design matters. However, since the rotation using the second vertical wall 52B is induced by contact between the second protrusion 21B and the inclined side surface 56, if the rotation angle is too small, no rotational force is generated. For example, as an extreme example, when the rotation angle of the input shaft 18 is 90° and the second protrusion 21B abuts the second vertical wall 52B, no moment in the rotational direction is generated, and therefore no rotation occurs. Although it is a matter of design, it is desirable to design the second vertical wall 52B to be used at a rotation angle of 120° or more.

In order to set the maximum rotation angle of the input shaft 18 to an angle less than 180°, it is sufficient to trim the structure corresponding to after the traveling distance corresponding to the required rotation angle from the basic structure shown in FIGS. 8A-8C (the structure after the required rotation angle of the first vertical wall 52A or the second vertical wall 52B). Similarly, when the input shaft 18 starts to rotate from an initial angle greater than 0°, the structure (part of the first vertical wall 52A) prior to the traveling distance corresponding to said angle may be trimmed. Moreover, if the input shaft 18 needs to rotate at a rotation angle of 180° or more, the structures shown in FIGS. 8A-8C can be connected in series and the area exceeding the required rotation angle may be trimmed. By adopting this structure, it is possible to achieve any rotation angle exceeding 180°.

Next, the basic structure of a case where the input shaft 18 is returned to a rotation angle of 0° after the rotation angle of the input shaft 18 reaches 180° as shown in FIGS. 8A-8C, that is, the basic structure of the rotary mechanism 6 for achieving reverse rotation, will be described now with reference to FIG. 9. To achieve reverse rotation, the structure shown in FIGS. 8A-8C may be arranged with their axes in opposite directions. In this case, the input shaft 18 is moved in the opposite direction to the direction shown in FIGS. 8A-8C, but the resulting rotating operation can be explained similarly to the explanation given using FIGS. 8A-8C. That is, in order to achieve a reverse rotation, the third vertical wall 52C and the fourth vertical wall 52D are used as shown in FIG. 9. The third vertical wall 52C is formed by rotating the above-described first vertical wall 52A by 180 degrees in a top view and arranging it on the opposite side in the left-right direction with the input shaft 18 at the center. The third vertical wall 52C is also constituted by an inclined wall portion 53, a curved portion 54, and a parallel wall portion 55. The fourth vertical wall 52D is formed by rotating the above-described second vertical wall 52B by 180 degrees in a top view and arranging it on the opposite side in the left-right direction with the input shaft 18 at the center. The fourth vertical wall 52D also has a side surface 56 formed thereon.

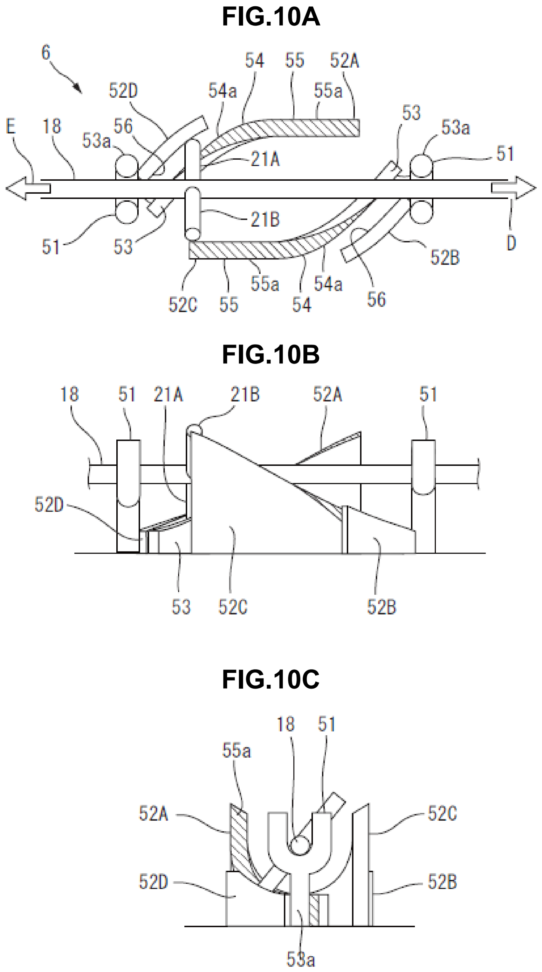

The rotary mechanism 6 of the present invention is configured by combining a structure for achieving the rotation of the input shaft 18 shown in FIGS. 8A-8C described above with a structure for achieving the rotation shown in FIG. 9, and causing reciprocating linear movements to convert into reciprocating rotational movements. The rotary mechanism 6 of the present invention has a structure that combines the structure shown in FIGS. 8A-8C and the structure shown in FIG. 9, that is, the structure shown in FIGS. 10A-10C. By adopting this structure, a mechanism is achieved that converts the linear front-rear movement of the cleaning device body 2 when it moves in the front-rear direction relative to the rotary shaft 9 into a reciprocating rotating operation of the rotary shaft 9. To achieve this structure, first to fourth vertical walls 52A-52D are provided on the cleaning device body 2 as shown in FIG. 2. In this embodiment, the first to fourth vertical walls 52A-52D correspond to the "wall" of the present invention.

When the cleaning device body 2 moves forward relative to the rotary shaft 9 against the spring force of the third compression coil spring 29, the input shaft 18 moves in the direction indicated by Arrow D in FIG. 10A, that is, in the direction toward the rear of the cleaning device body 2. During such forward process in which the input shaft 18 moves in the direction approaching the rear of the cleaning device body 2, the first protrusion 21A first moves while contacting the side surface 53a of the inclined wall portion 53 of the first vertical wall 52A, the curved surface 54a of the curved portion 54, and the upper surface 55a of the parallel wall portion 55. After the rotation angle of the input shaft 18 reaches a predetermined angle, the second protrusion 21B moves while contacting the side surface 56 of the second vertical wall 52B.

In this way, the first protrusion 21A moves while contacting the first vertical wall 52A, and the second protrusion 21B moves while contacting the second vertical wall 52B, causing the input shaft 18 to rotate so that the rotation angle increases from 0° to 180°. During a forward process, the side surface 53a of the inclined wall portion 53 of the first vertical wall 52A, the curved surface 54a of the curved portion 54, the upper surface 55a of the parallel wall portion 55, and the side surface 56 of the second vertical wall 52B correspond to the "contact portion" as defined in the present invention.

When the cleaning device body 2 moves rearward relative to the rotary shaft 9, the input shaft 18 moves in the direction indicated by Arrow E in FIG. 10A. During such a return process in which the input shaft 18 moves in a direction away from the center of the cleaning device body 2, the second protrusion 21B moves while contacting the side surface 53a of the inclined wall portion 53 of the third vertical wall 52C, the curved surface 54a of the curved portion 54, and the upper surface 52a of the parallel wall portion 55. Then, after the rotation angle decreases to a predetermined angle, the first protrusion 21A moves while contacting the side surface 56 of the fourth vertical wall 52D, thereby rotating the input shaft 18 so that the rotation angle decreases from 180° to 0°. During the return process, the side surface 53a of the inclined wall portion 53 of the third vertical wall 52C, the curved surface 54a of the curved portion 54, the upper surface 55a of the parallel wall portion 55, and the side surface 56 of the fourth vertical wall 52D correspond to the "contact portion" as defined in the present invention.

### Description of operation according to the first embodiment

The operation of the optical connector cleaning device 1 according to this embodiment will be described now. FIG. 2 shows a top view of an internal structure of the optical connector cleaning device 1 incorporating the rotary mechanism 6 of the present invention. In FIG. 2, a half of the cleaning device body 2 is removed and a part of the guide 7 is cut away. To clean the optical connector 14 with this optical connector cleaning device 1, the guide 7 of the cleaning portion 3 is inserted into the adapter 15 and the cleaning device body 2 is pushed forward relative to the guide 7. At this time, the rotary mechanism 6 converts a linear movement of pushing the cleaning device body 2 into a rotary movement such that the rotary shaft 9 rotates in one direction.

In this embodiment, all components including the input shaft 18 of the rotary shaft 9 are formed as an integrally-molded single continuous body. The base (rear end) of the input shaft 18 is connected to the cleaning medium feed mechanism 5 so as to be rotatable around the axis of the input shaft 18. When the cleaning device body 2 is pushed toward the adapter 15, the cleaning device body 2 and the rotary shaft 9 move forward without changing the position of the guide 7, which already abuts a deep surface in the adapter 15. The rotary shaft 9 moves forward until the cylindrical portion 13 abuts the rear end of the guide 7. In this situation, the cleaning medium 22 exposed on the cleaning head 25 of the cleaning pin 17 is pressed onto the surface-to-be-cleaned of the optical connector 14 by the spring force of the second compression coil spring 24.

In this state, when the cleaning device body 2 is pushed further forward, the third compression coil spring 29 contracts so that the input shaft 18 of the rotary shaft 9 and the sliding member 31 of the cleaning medium feed mechanism 5 move rearward (to the right in the sheet of FIG. 2) relative to the cleaning device body 2. The cylindrical portion 13 integral with the input shaft 18 is provided with first and second protrusions 21A and 21B. When the input shaft 18 moves rearward relative to the cleaning device body 2, the first protrusion 21A moves while contacting with the first vertical wall 52A provided on the cleaning device body 2. Then, the second protrusion 21 moves while contacting with the second vertical wall 52B, thereby applying a rotational force to the input shaft 18.

At this time, the sliding member 31 moves integrally with the input shaft 18, causing the take-up-side bobbin 32 to rotate in the take-up direction and take up the cleaning medium 22. Accordingly, the cleaning medium 22 exposed on the cleaning head 25 moves in the longitudinal direction (feed direction), feeding the unused cleaning medium 22. Thereby, the feeding operation of the cleaning medium 22, that is, the cleaning operation, and the rotation operation of the rotary shaft 9 are performed simultaneously and in synchronization. When returning the rotary shaft 9 to its initial position, the restoring force of the third compression coil spring 29 is used. In other words, when a finger that has been pushing the cleaning device body 2 is released, the restoring force of the third compression coil spring 29 moves the rotary shaft 9 (input shaft 18) and the sliding member 31 in the opposite direction (forward relative to the cleaning device body 2). At this time, the second protrusion 21B moves along the third vertical wall 52C, and then the first protrusion 21A moves along the fourth vertical wall 52D, thereby applying a rotational force to the input shaft 18 in the opposite direction to the above. That is, the cleaning device body 2 performs a reciprocating movement in which it moves forward relative to the rotary shaft 9 and then moves rearward, thereby causing the rotary shaft 9 to rotate from 0° to 180°, and then to 0°, and then to 180°.

During the return process in which the cleaning device body 2 moves rearward relative to the rotary shaft 9, the cleaning head 25 moves forward relative to the cleaning device body 2 such that the unused cleaning medium 22 is drawn out from the feed-side bobbin 23. The cleaning medium feed mechanism 5 is configured so that the take-up-side bobbin 32 rotates only in one direction. Accordingly, even if the sliding member 31 moves in the opposite direction to the direction during take up, the take-up-side bobbin 32 does not rotate in the opposite direction. That is, only the taking-up is done on the cleaning medium 22. Therefore, even if the reciprocating movement continues, the used cleaning medium 22 is not returned from the take-up-side bobbin 32 to the cleaning head 25, but instead, an unused cleaning medium 22 is always supplied to the cleaning head 25.

In this embodiment, an example is given in which all of the first to fourth vertical walls 52A-52D are used. However, when the rotation angle of the rotary shaft 9 is designed to be small, an unnecessary vertical wall 52 does not need to be provided. For example, if the rotation angle of the rotary shaft 9 (input shaft 18) is less than 120°, the second vertical wall 52B is not necessary. Also, a portion of the third vertical wall 52C corresponding to the rotation angle of 120° to 180° is trimmed.

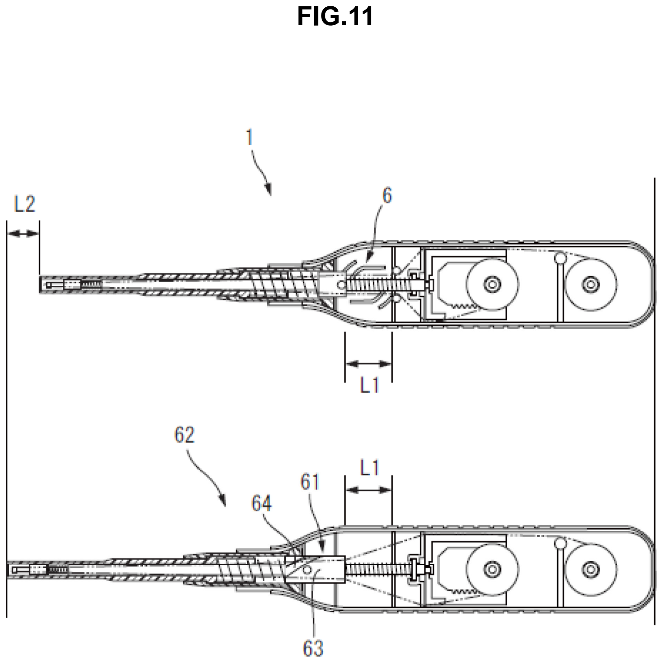

FIG. 11 shows a comparison of the rotary mechanism 6 of the present invention and a conventional rotary mechanism. FIG. 11 shows an optical connector cleaning device 1 according to this embodiment and an optical connector cleaning device 62 of a comparative example in which the rotary mechanism 6 of the optical connector cleaning device 1 is replaced with a conventional cylindrical cam 61. The cylindrical cam 61 is constituted by a cylinder 63; a spiral groove 64 formed on an outer periphery of the cylinder 63; and a protrusion (not illustrated) which is provided on the side of a cleaning device body and which fits into the groove 64 on the cylinder 63.

In the optical connector cleaning device 1 according to this embodiment, a small protrusion 21 moves, but in the optical connector cleaning device 62 of the comparative example, the cylindrical cam 61 with a large volume moves. If both devices are configured so that the traveling distance L1 of the rotary shaft 9 is the same, it can be understood that the size of the rotary mechanism of the optical connector cleaning device 62 of the comparative example, particularly the length in the traveling direction, is larger than that of the optical connector cleaning device 1 according to the embodiment of the invention. This is because the length of the cylinder 63 needs to be at least L1. Therefore, the overall length of the optical connector cleaning device 62 using a conventional cylindrical cam 61 is longer by a length L2 than that of the optical connector cleaning device 1 according to this embodiment.

In the optical connector cleaning device 1 according to the present invention configured as described above, the length of the rotary mechanism 6 is the sum of the traveling distance L1 of the rotary shaft 9 and the size of the protrusion 21. Since the protrusion 21 is not large, said length is approximately L1. Meanwhile, in an optical connector cleaning device 62 using a conventional cylindrical cam 61, the length of the rotary mechanism is the sum of the length of the cylinder 63 and the traveling distance L1. Since the length of the cylinder 63 is at least L1, the length of the rotary mechanism is approximately twice L1. In other words, the length of the rotary mechanism 6 of the present invention can be reduced to about half that of a conventional optical connector cleaning device that employs the cylindrical cam 61.

Moreover, since the present invention employs a configuration in which a protrusion 21 is provided on the input shaft 18 side instead of a spiral groove 64 (cam groove), the rotary mechanism 6 can be easily achieved even for small diameter shafts or thin-walled cylindrical bodies such as covers attached to a shaft. Moreover, the rotary mechanism 6 of the present invention is configured to convert a linear movement into a rotational movement using a vertical wall 52 having a vertical structure extending in a direction perpendicular to the axis C of the rotary shaft 9, and therefore there is no need for a three-dimensional, complex structure such as that forming a groove on a curved surface. Accordingly, the mold structure for molding the cleaning device body 2 can adopt a normal structure that clamps from above and below, which has the advantage that the molded product can be released by only opening the mold from above and below. Therefore, according to this embodiment, it is possible to provide an optical connector cleaning device 1 including a rotary mechanism 6, that is compact, has a wide range of applications, and that is easy to mold and demold.

### Second embodiment

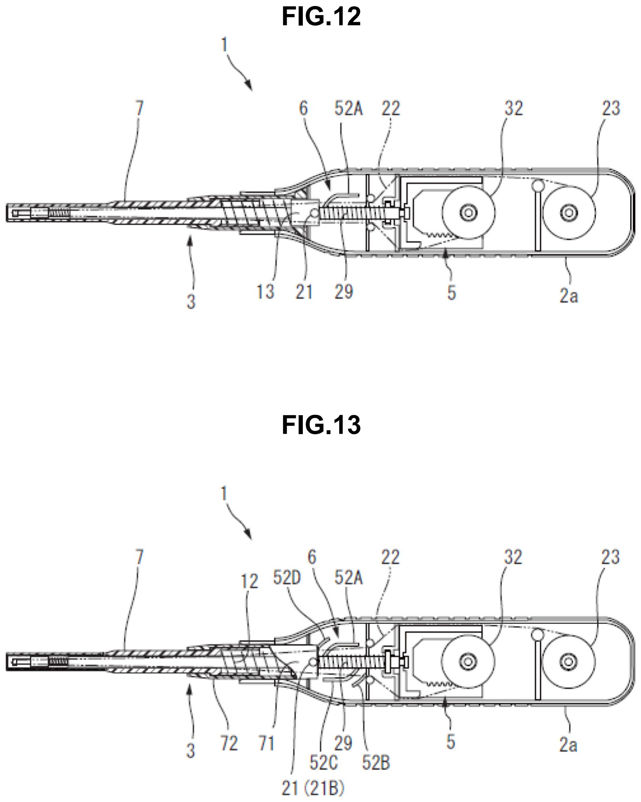

The rotary mechanism can be configured as shown in FIG. 12. In FIG. 12, the same or equivalent members as those described with reference to FIGS. 1-11 are designated by the same reference numerals, and detailed description thereof will be omitted where appropriate. In the rotary mechanism 6 shown in FIG. 12, only the first vertical wall 52A is provided on the cleaning device body 2, and the second to fourth vertical walls 52B-52D are not provided. In this embodiment, a torsional restoring force of the third compression coil spring 29 is used to rotate the rotary shaft 9 during a return process in which the rotary shaft 9 moves forward relative to the cleaning device body 2.

A front end of the third compression coil spring 29 in this embodiment is fixed to a rear end of the cylindrical portion 13. A rear end of the third compression coil spring 29 is fixed to a support bracket 27 (cleaning device body 2). Both ends of the third compression coil spring 29 are thus configured to be non-rotatable, and therefore the rotation of the input shaft 18 during a forward process causes a twist in the third compression coil spring 29. A restoring force against this twist acts on the rotary shaft 9 during the return process, applying a rotational force to the rotary shaft 9 so as to rotate the rotary shaft 9 in the reverse direction. In cases where the rotation angle of the rotary shaft 9 is small and one vertical wall 52 is sufficient, adopting this embodiment eliminates the need for a vertical wall 52 for reverse rotation, thereby simplifying the structure.

### Third embodiment

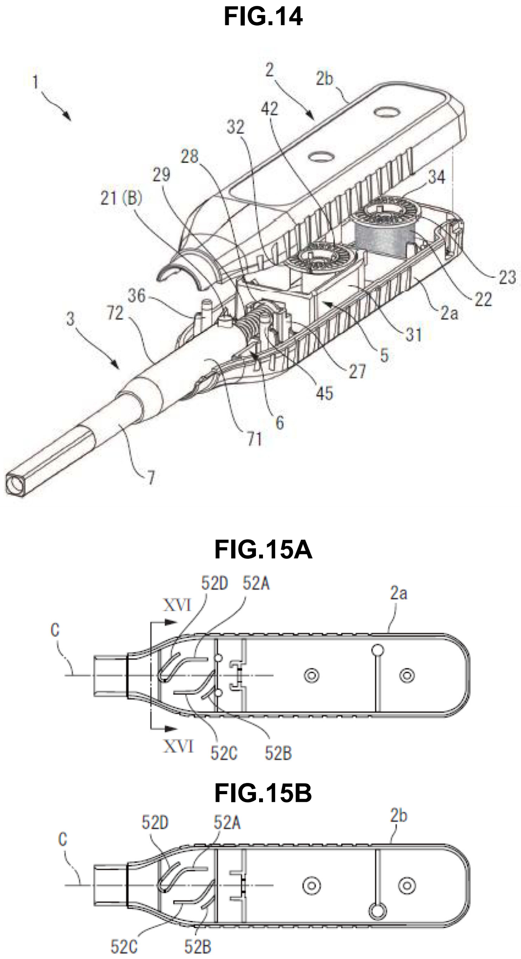

The rotary shaft 9 can be formed as shown in FIGS. 13 and 14. In these drawings, the same or equivalent members as those described with reference to FIGS. 1-11 are designated by the same reference numerals, and detailed description thereof will be omitted where appropriate. The rotary shaft 9 shown in FIG. 13 is provided with a cylindrical portion 72 having a thin cylindrical peripheral wall 71 instead of a columnar portion 13. The cylindrical portion 72 corresponds to the guide lock 8 in the first embodiment, but the difference is that, while the guide lock 8 is fixed to the cleaning device body 2, the cylindrical portion 72 is fixed to the rotary shaft 9 and can move in the front-rear direction relative to the cleaning device body 2. The peripheral wall 71 of the cylindrical portion 72 is arranged coaxially with the rotary shaft 9. In this embodiment, a first protrusion 21A (not illustrated) and a second protrusion 21B are provided on the thin peripheral wall 71 at the rear end of the cylindrical portion 72. As shown in FIG. 14, the cylindrical portion 72 protrudes forward from the front end of the cleaning device body 2 and covers the rear end of the guide 7 from the outside. The rear end of the guide 7 in this embodiment is located inside the cylindrical portion 72. The guide 7 is biased forward relative to the rotary shaft 9 by a first compression coil spring 12 arranged in the cylindrical portion 72.

If a conventional cylindrical cam 61 is formed into a thin cylindrical shape, a spiral groove 64 cannot be formed, and therefore the rotary mechanism 6 cannot be achieved. However, as shown in this embodiment, by providing the first and second protrusions 21A, 21B on the thin-walled cylinder side, the rotary mechanism 6 can be achieved without any problems while using the thin-walled cylindrical portion 72. Even when adopting such a structure in which the first and second protrusions 21A, 21B are provided on the thin-walled cylindrical portion 72, the rotary mechanism 6 operates in the same manner as when adopting the first embodiment described above.

### Fourth embodiment

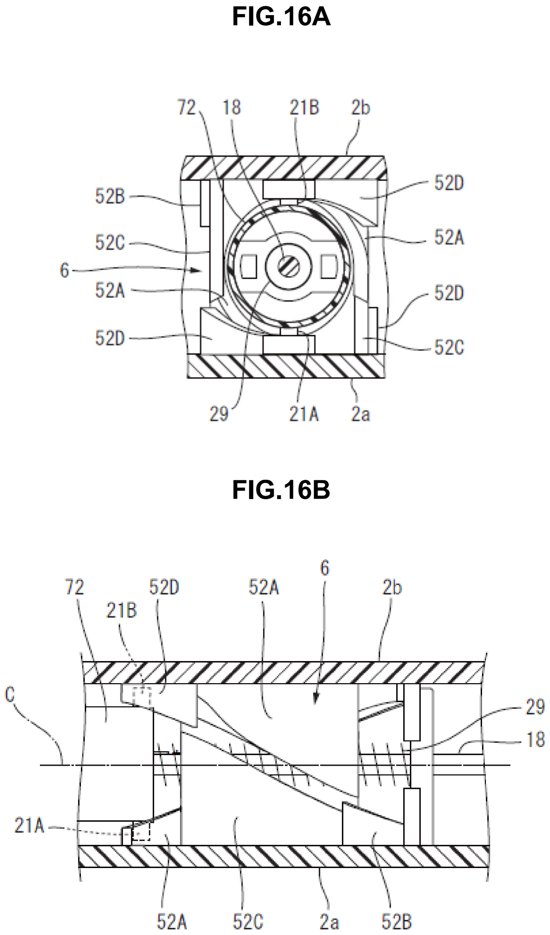

The first to fourth vertical walls 52A-52D may be configured as shown in FIGS. 15A-16B. In these drawings, the same or equivalent members as those described with reference to FIGS. 1-11, 13 and 14 are designated by the same reference numerals, and detailed explanations thereof will be omitted where appropriate. The cross-section in FIG. 16A at the position indicated by line XVI-XVI in FIG. 15A. When this embodiment is adopted, a first half 2a (hereinafter, this half will be referred to as the "base-side half 2a") of the cleaning device body 2 is provided with first to fourth vertical walls 52A-52D as shown in FIG. 15A. A second half 2b (hereinafter, this half will be referred to as the "lid-side half 2b") of the cleaning device body 2 is provided with first to fourth vertical walls 52A-52D as shown in FIG. 15B.

The first to fourth vertical walls 52A-52D of the cover-side half 2b and the first to fourth vertical walls 52A-52D of the base-side half 2a are arranged symmetrically with respect to the rotary shaft 9. Therefore, as shown in FIGS. 16A and 16B, when the lid-side half 2b and the base-side half 2a are combined with each other, the input shaft 18 is sandwiched between the first to fourth vertical walls 52A-52D provided on the lid-side half 2b and the first to fourth vertical walls 52A-52D provided on the base-side half 2a. By adopting this configuration, during the forward process when the first protrusion 21A moves while contacting the first vertical wall 52A (first wall) of the base-side half 2a such that a rotational force is applied from the first protrusion 21A to the rotary shaft 9 (input shaft 18), the second protrusion 21B moves while contacting the first vertical wall 52A of the lid-side half 2b such that a rotational force is applied also from the second protrusion 21B to the rotary shaft 9 (input shaft 18). Meanwhile, during the return process, the second protrusion 21B moves while contacting the third vertical wall 52C of the base-side half 2a such that a rotational force is applied from the second protrusion 21B to the rotary shaft 9 (input shaft 18), and the first protrusion 21A moves while contacting the third vertical wall 52C of the lid-side half 2b such that a rotational force is applied also from the first protrusion 21A to the rotary shaft 9 (input shaft 18).

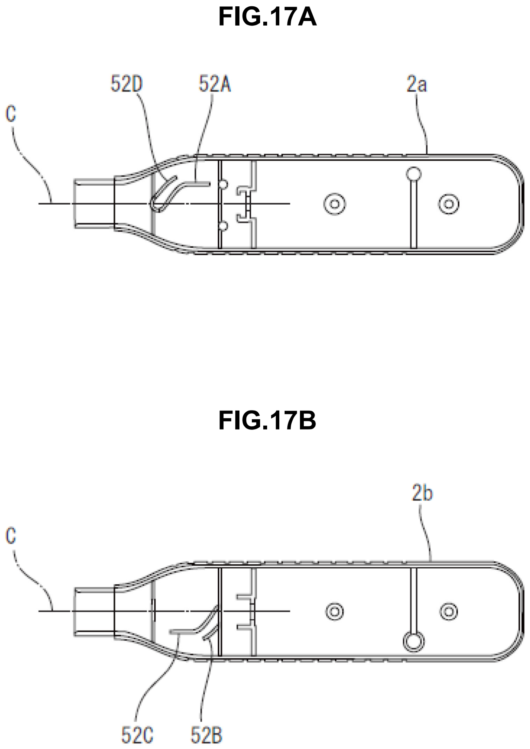

Therefore, an equal moment acts on both the first protrusion 21A and the second protrusion 21B, and therefore the rotation of the rotary shaft 9 becomes smooth. Moreover, since the pressing force acts simultaneously on the first and second protrusions 21A, 21B, the pressing force applied to each of the protrusions 21A, 21B is half that in the case where only one protrusion 21A is provided, and therefore it is possible to increase the durability of the first and second protrusions 21A, 21B. It should be noted that the first to fourth vertical walls 52A-52D of the lid-side half 2b and the first to fourth vertical walls 52A-52D of the base-side half 2a do not necessarily have to be axially symmetrical, and not all vertical walls 52 may be provided in each half 2a, 2b. For example, if only the first protrusion 21A can be installed on the rotary shaft 9, a first vertical wall 52A and a fourth vertical wall 52D are provided on the base-side half 2a as shown in FIG. 17A, and a second vertical wall 52B and a third vertical wall 52C are provided on the lid-side half 2b as shown in FIG. 17B. By adopting this configuration, reciprocating rotational movement can be achieved with only one of the protrusions (first protrusion 21A). In this case, the second and third vertical walls 52B, 52C of the cover-side half 2b are not axially symmetrical with the first and fourth vertical walls 52A, 52D of the base-side half 2a.

The optical connector cleaning device 1 according to the respective embodiments described above includes a feed-side bobbin 23, a take-up-side bobbin 32, a cleaning medium feed mechanism 5, a first cleaning medium guide 36, and a second cleaning medium guide 45. The feed-side bobbin 23 holds the cleaning medium 22 wound in a roll before use, and is housed inside the cleaning device body 2 and rotatably supported by the cleaning device body 2. The cleaning medium 22 is taken up by the take-up-side bobbin 32 with the cleaning medium 22 being drawn from the feed-side bobbin 23 and folded back in the cleaning head 25 so as to be rotatable integrally with the cleaning head 25. The take-up-side bobbin 32 is accommodated inside the cleaning device body 2 and is supported on the cleaning device body 2 so as to be rotatable only in the direction in which the cleaning medium 22 is taken up. The cleaning medium feed mechanism 5 converts a reciprocating movement of the cleaning device body 2 in parallel relative to the rotary shaft 9 into a rotational movement, thereby driving the take-up-side bobbin 32 in the direction in which the cleaning medium 22 is taken up.

The first cleaning medium guide 36 determines the position where the unused cleaning medium 22 drawn from the feed-side bobbin 23 enters the rotary mechanism 6. The second cleaning medium guide 45 determines the position at which the used cleaning medium 22 guided from the rotary mechanism 6 to the take-up-side bobbin 32 exits the rotary mechanism 6. This makes it possible to pass the cleaning medium 22 inside the cylindrical portion 13 of the rotary shaft 9 while avoiding interference with the rotary mechanism 6, and therefore the feeding and rotating operations of the cleaning medium 22 can be carried out smoothly on the cleaning head 25, allowing the optical connector 14 to be cleaned sufficiently and quickly.

### REFERENCE SIGNS LIST

1: optical connector cleaning device; 2: cleaning device body; 2a: base-side half; 2b: lid-side half; 4: grip portion; 5: cleaning medium feed mechanism; 6: rotary mechanism; 8: guide lock; 9: rotating shaft; 13: cylindrical portion; 14: optical connector; 22: cleaning medium; 25: cleaning head; 21: projection; 21A: first protrusion; 21B: second protrusion; 23: feed-side bobbin; 29: third compression coil spring; 32: take-up-side bobbin; 36: first cleaning medium guide; 45: second cleaning medium guide; 52: vertical wall (wall); 52A: first vertical wall (first wall); 52B: second vertical wall (second wall); 52C: third vertical wall (third wall); 52D: fourth vertical wall (fourth wall); 53a: side surface (contact portion); 54a: curved surface (contact portion); 55a: top surface (contact portion); 56: side surface (contact portion); 71: circumferential wall; 72: cylindrical portion.

## Claims

1. An optical connector cleaning device comprising:
a cleaning device body having a grip portion;
a rotary shaft having one end inserted into the cleaning device body and supported by the cleaning device body such that the rotary shaft is rotatable and movable in parallel by a predetermined traveling distance, while the rotary shaft projects in one direction from the cleaning device body;
a cleaning head provided at a distal end portion of the rotary shaft so as to rotate integrally with the rotary shaft, the cleaning head configured to face a surface-to-be-cleaned of the optical connector;
a cleaning medium extending along the rotary shaft, being folded back at the cleaning head and rotating together with the rotary shaft; and
a rotary mechanism configured to rotate the rotary shaft by reciprocating the cleaning device body in parallel relative to the rotary shaft, wherein
the rotary mechanism includes:
a protrusion provided on the rotary shaft and protruding in a direction perpendicular to the axis of the rotary shaft; and
a wall provided on the cleaning device body and extending along the rotary shaft at a position adjacent to the rotary shaft, wherein
the wall includes a contact portion with which the protrusion is in contact while moving when the cleaning device body moves in parallel relative to the rotary shaft; and
a rotational force is applied to the rotary shaft as the cleaning device body moves in parallel relative to the rotary shaft while the contact portion contacts with the protrusion.

2. The optical connector cleaning device according to claim 1, wherein
the protrusion includes a first protrusion protruding in a first direction perpendicular to the axis and a second protrusion protruding in a second direction, which is opposite to the first direction, perpendicular to the axis; wherein
the wall includes
a first wall with which a first one of the first protrusion and the second protrusion contacts, and
a second wall with which a second one, which is different from the first one, of the first protrusion and the second protrusion contacts in a state in which a rotation angle of the rotary shaft reaches a predetermined angle as a result of the first one of protrusions contacting with the contact portion of the first wall; wherein
the second wall includes a contact portion to which the other protrusion moves while in contact, thereby applying a rotational force to the rotary shaft in a direction that increases the rotation angle.

3. The optical connector cleaning device according to claim 2, further comprising
a third wall and a fourth wall configured to rotate the rotary shaft in a direction in which the rotation angle decreases by moving in a direction opposite to a direction in which the first wall and the second wall move such that the rotation angle increases, wherein
the third wall includes a contact portion with which the second one of protrusions contacts while moving, the second one of protrusions having moved while contacting the second wall;
the fourth wall includes a contact portion with which the first one of protrusions contacts while moving while the rotation angle of the rotary shaft is reduced to a predetermined angle as a result of the second one of protrusions moving while contacting the contact portion on the third wall; and
the contact portion on the fourth wall is configured such that a rotational force is applied to the rotary shaft in a direction that reduces the rotation angle as a result of the first one of protrusions moving while contacting with the contact portion on the fourth wall.

4. The optical connector cleaning device according to claim 1, further comprising a compression coil spring configured to bias, relative to the cleaning device body, the rotary shaft in a direction in which the rotary shaft protrudes from the cleaning device body, wherein
a first end of the compression coil spring is fixed to the cleaning device body;
a second end, which is different from the first end, of the compression coil spring is fixed to the rotary shaft;
the wall is configured to rotate the rotary shaft in a first direction during a process of moving the cleaning device body in parallel relative to the rotary shaft against a spring force of the compression coil spring; and
the rotary shaft is rotated in a second direction opposite to the first direction, during a return process in which the cleaning device body returns by the spring force of the compression coil spring, by a restoring force of the compression coil spring in a torsional direction.

5. The optical connector cleaning device according to claim 1, further comprising
a cylindrical portion including a thin cylindrical peripheral wall, the cylindrical portion being positioned coaxially with the rotary shaft and arranged at a portion of the rotary shaft inserted into the cleaning device body; wherein
the protrusion is provided on the peripheral wall.

6. The optical connector cleaning device according to claim 3, wherein
the cleaning device body is formed of a first half and a second half which can be separated in a direction perpendicular to the axis of the rotary shaft;
each of the first half and the second half is provided with the first wall, the second wall, the third wall, and the fourth wall;
the first wall, the second wall, the third wall, and the fourth wall provided on the first half, and the first wall, the second wall, the third wall, and the fourth wall provided on the second half are arranged symmetrically with respect to the rotary shaft, respectively; and
during a process in which the first protrusion moves while contacting the first wall on the first half and a rotational force is applied from the first protrusion to the rotary shaft, the second protrusion moves while contacting the first wall on the second half and a rotational force is applied also from the second protrusion to the rotary shaft.

7. The optical connector cleaning device according to claim 1, further comprising:
a feed-side bobbin configured to hold a roll of an unused cleaning medium, the feed-side bobbin accommodated inside the cleaning device body and rotatably supported by the cleaning device body;
a take-up-side bobbin around which the cleaning medium, drawn from the feed-side bobbin and folded back at the cleaning head in a state rotatable integrally with the cleaning head, is wound, the take-up-side bobbin being accommodated inside the cleaning device body and supported by the cleaning device body so as to be rotatable only in a direction in which the cleaning medium is taken up by the cleaning device body; and
a cleaning medium feed mechanism configured to convert a reciprocating movement of the cleaning device body in parallel relative to the rotary shaft into a rotational movement to drive the take-up-side bobbin in a direction in which the cleaning medium is taken up, wherein
the optical connector cleaning device further comprises:
a first cleaning medium guide configured to determine a position where an unused cleaning medium drawn from the feed-side bobbin enters the rotary mechanism; and
a second cleaning medium guide which determines a position at which used cleaning medium, which is guided from the rotary mechanism to the take-up-side bobbin, exits the rotary mechanism.
